Europäisches Patentamt

European Patent Office

Office européen des brevets

(19)

(11) EP 0 681 122 B1

(12) EUROPEAN PATENT SPECIFICATION

(45) Date of publication and mention
of the grant of the patent:
**27.02.2002   Bulletin 2002/09**

(51) Int Cl.⁷: **F16H 61/04**

(21) Application number: **95105902.1**

(22) Date of filing: **20.04.1995**

(54) **Control system for automatic transmission**

Steuerungssystem für Automatikgetriebe

Système de commande pour transmission automatique

(84) Designated Contracting States:
**DE GB**

(30) Priority: **02.05.1994   JP 9359194**

(43) Date of publication of application:
**08.11.1995   Bulletin 1995/45**

(73) Proprietor: **AISIN AW CO., LTD.**
**Anjo-shi Aichi-ken (JP)**

(72) Inventors:
  • **Tsukamoto, Kazumasa**
    **Anjo-shi, Aichi-ken (JP)**
  • **Hayabuchi, Masahiro**
    **Anjo-shi, Aichi-ken (JP)**
  • **Nishida, Masaaki**
    **Anjo-shi, Aichi-ken (JP)**
  • **Yamamoto, Yoshihisa**
    **Anjo-shi, Aichi-ken (JP)**
  • **Kusafuka, Muneo**
    **Anjo-shi, Aichi-ken (JP)**
  • **Mikami, Kazuhiro**
    **Anjo-shi, Aichi-ken (JP)**
  • **Tsutsui, Hiroshi**
    **Anjo-shi, Aichi-ken (JP)**

(74) Representative: **VOSSIUS & PARTNER**
**Siebertstrasse 4**
**81675 München (DE)**

(56) References cited:
  DE-A- 4 305 024          US-A- 5 005 444
  US-A- 5 107 723          US-A- 5 224 399

## Description

The present invention relates to a control system for an automatic transmission.

The automatic transmission of the prior art is equipped with a torque converter acting as a fluid coupler for receiving the rotation generated by an engine, and a transmission for changing the speed of the rotation transmitted from the torque converter. The transmission is equipped with a planetary gear unit composed of a plurality of gear elements for effecting the shifting in accordance with a shift pattern which is preset to correspond to the vehicle speed, the throttle opening and so on.

Incidentally, the automatic transmission can select a (parking) P-range, a (reverse) R-range, a (neutral) N-range, a (drive) D-range, a (second) S-range, a (low) L-range and so on. If the N-range is switched to the D-range by the shift lever, for example, the rotation of the engine in the idling state is transmitted through the torque converter to the transmission, to cause the creep phenomenon in which the vehicle will advance little by little without any depression of the accelerator pedal.

In case, therefore, it is detected that a range such as the D-range, the S-range or the L-range (as will be called the "forward range") for running the vehicle forward is selected, that the accelerator pedal is released, that the brake pedal is depressed and that the vehicle speed is substantially "0", the forward clutch to be applied at the forward running time of the aforementioned transmission, i.e., a first clutch is released or brought into slipping engagement to establish a pseudo-neutral state (as will be called the "neutral control state") so that the aforementioned creep phenomenon may be prevented (as disclosed in U.S.P. No. 4,850,251).

Moreover, the pressure of the oil to be fed to the hydraulic servo of the first clutch can be adjusted. For this adjustment, there is arranged a linear solenoid valve for generating a control pressure, by which a regulator valve is actuated to generate a regulated oil pressure. Also arranged is a change-over valve for selectively feeding the regulated oil pressure or the D-range pressure to the hydraulic servo.

In the aforementioned control system for an automatic transmission of the prior art, the oil pressure to be fed to the hydraulic servo of the first clutch to be applied in a forward range can be adjusted to smoothen the engagement of the first clutch when the range is switched from the N-range to the D-range (or forward range).

In the control system for an automatic transmission of the prior art, however, when the regulated oil pressure or the D-range pressure is selected and fed to the hydraulic servo by the change-over valve, the engaging shock of the first clutch may occur at the switching time from the N-range to the D-range by operating the shift lever.

Specifically, at the switching time from the N-range to the D-range (as will be called the "N-D switching"), the manual valve is switched by the operation of the shift lever to generate the D-range pressure. Then, the D-range pressure is regulated by the regulator valve to generate the regulated oil pressure, and the change-over valve is switched to feed the regulated oil pressure to the hydraulic servo so that the first clutch can be smoothly applied.

If the switching of the change-over valve is delayed at this time, the D-range pressure is temporarily fed through the change-over valve to the hydraulic servo, which is formed with a loss stroke so that no influence is effected by the feed of the D-range pressure.

If, however, the aforementioned N-D switching is effected immediately after the switching from the D-range of the N-range, the oil at the time of selecting the D-range resides in the hydraulic servo at that N-D switching time. If, therefore, the D-range pressure is temporarily fed to the hydraulic servo due to the delay in the switching of the change-over valve, the oil pressure in the hydraulic servo prematually rises to cause a serious engaging shock.

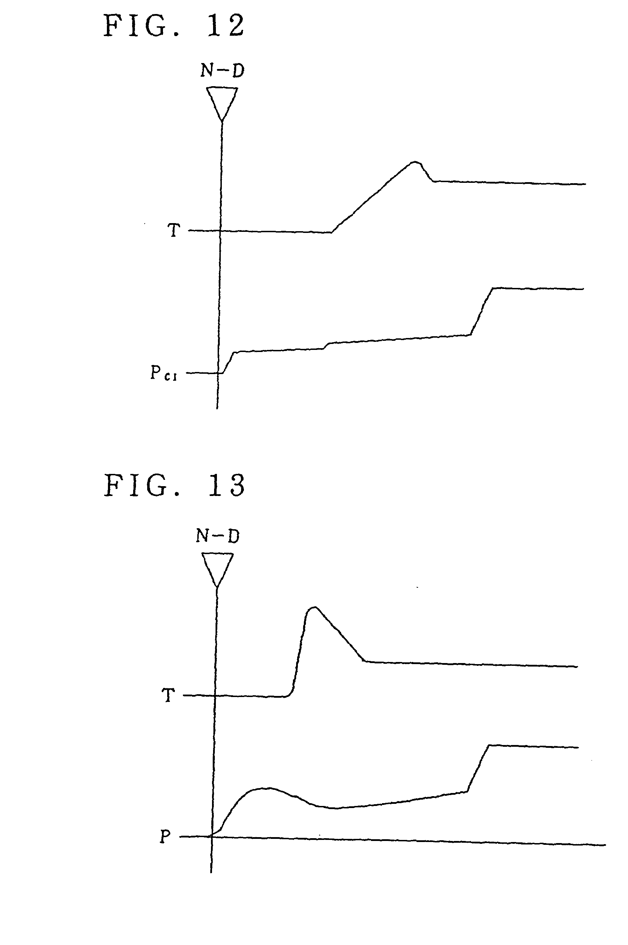

Fig. 13 is a waveform chart illustrating the oil pressure and the torque in the control system for an automatic transmission of the prior art. Incidentally, Fig. 13 plots the oil pressure P in the hydraulic servo of the first clutch and the torque T against the time.

If the N-D switching is effected immediately after the range switching from the D-range to the N-range (as will be called the "D-N switching"), the oil pressure P in the hydraulic servo of the first clutch temporarily rises, as shown, so that the torque T abruptly rises to cause the engaging shock.

It is, therefore, conceivable to keep the change-over valve switched, too, to the regulated oil pressure selecting side even while the N-range is selected by the shift lever. Even if the D-range pressure is generated in this case according to the N-D switching, the change-over valve has been switched to the regulated oil pressure selecting side so that the hydraulic servo is fed with the regulated oil pressure to cause no engaging shock.

Since, however, the solenoid valve is used for switching the change-over valve and is actuated by a solenoid, this solenoid has to be turned ON (or conductive) and energized not only while the pseudo-neutral state is established but also while the N-range is selected. As a result, the power consumption increases, and still the worse the solenoid generates heat to deteriorate the durability of the solenoid valve.

From US-A-5 005 444 a hydraulic control apparatus for controlling a shifting of a hydraulically operated frictional coupling device of an automatic transmission from a neutral position to a forward drive position in response to an operation of a shift lever is known. The apparatus includes a shift control valve operable in response to the shift lever, between a position for supplying a fluid to the coupling device for engagement thereof, and a position for discharging the fluid from the coupling device for disengagement thereof, a flow control device for controlling a rate of flow of the fluid between the shift lever valve and the coupling device, a fail-safe fluid passage disposed between the shift lever valve and the coupling device, for fluid communication between the shift lever valve and the frictional coupling device, irrespective of an operating position of the flow control device, and a controller for controlling the flow control device so as to restrict the fluid flow into or from the coupling device after an engaging or disengaging action of the frictional coupling device is actually started.

US-A-5,224,339 discloses a control system for an automatic transmission which includes a main hydraulic line to which hydraulic pressure is introduced when a manual valve takes a reverse range position for reverse movement. First and second hydraulic lines are separated from the main hydraulic line, a first frictional element is connected with the first hydraulic line, and a second frictional element is connected with the second hydraulic line. An accumulator is disposed on the second hydraulic line, a shift valve is disposed on the second hydraulic line closer to the second frictional element than the accumulator, and a first drain port is formed on the manual valve for draining hydraulic fluid from the main hydraulic line when the manual valve is shifted from the reverse range to another range. A spool is disposed in the shift valve for moving to a position to shift the shift valve so that the second line is interrupted by the shift valve and divided between a second frictional element line and an accumulator line. A second drain port is formed in the shift valve for draining the hydraulic fluid in the second frictional element line when the spool moves to the position where the shift valve interrupts the second hydraulic line between the second frictional element line and the accumulator line. A shift shock can be suppressed in a shifting operation involving the reverse range.

An object of the present invention is to solve the aforementioned problems of the control system for an automatic transmission of the prior art and to provide a control system for an automatic transmission, which is enabled to improve the durability of the solenoid valve while suppressing the heat generation of the solenoid and which is freed from the engaging shock even in case the N-D switching is effected immediately after the D-N switching.

The object is achieved by the features of the claims.

According to an aspect of the present invention, there is provided a control system for an automatic transmission, which comprises: a fluid coupler for transmitting the rotation of an engine to a transmission; a clutch adapted to be applied, when a forward running range is selected, and released when a neutral range is selected; range selecting means for selecting a range; range detecting means for detecting the selected range;

a hydraulic circuit; and a control unit.

The hydraulic circuit includes: a hydraulic servo adapted to be fed with an oil pressure for applying the clutch; a manual valve adapted by operating the range selecting means to take at least a forward range position for generating a forward range oil pressure and a neutral range position; a regulator valve for regulating the forward range oil pressure to generate a regulated oil pressure; a solenoid valve adapted to be turned ON/OFF by the control unit for generating a signal oil pressure; and a change-over valve adapted to be switched in response to the signal oil pressure for taking a first position to feed the forward range oil pressure to the hydraulic servo and a second position to feed the regulated oil pressure to the hydraulic servo.

Moreover, the control unit includes delay means for outputting, if a switching from the forward running range to the neutral range is detected by the range detecting means, a signal to the solenoid valve so that the change-over valve may be placed in the second position till a set time period elapses, and in a first position when the set time period elapses.

According to another aspect of the present invention, the change-over valve takes the first position, if the solenoid valve is ON, and the second position if OFF.

According to another aspect of the present invention, the control system for an automatic transmission further comprises hydraulic servo rotation deciding means for deciding the rotational state of the hydraulic servo. Moreover, the hydraulic servo has a check valve, and the control unit further includes delay inhibiting means for inhibiting the delay of the delay means if it is decided that the rotational state of the hydraulic servo is sufficient for opening a check valve.

According to the present invention, the control system for an automatic transmission, comprises: the fluid coupler for transmitting the rotation of the engine to the transmission; the clutch adapted to be applied, when the forward running range is selected, and released when the neutral range is selected; the range selecting means for selecting a range; the range detecting means for detecting the selected range; the hydraulic circuit; and the control unit.

If, in this case, the driver operates the range selecting means to select a range, this selected range is detected by the range detecting means. In case, moreover, the forward running range is selected, the rotation of the engine is transmitted through the fluid coupler and the clutch to the transmission. In case the neutral range is selected, the rotation of the engine is transmitted to the fluid coupler but not to the transmission.

The hydraulic circuit includes: the hydraulic servo adapted to be fed with the oil pressure for applying the clutch; the manual valve adapted by operating the range selecting means to take at least the forward range position for generating the forward range oil pressure and the neutral range position; the regulator valve for regulating the forward range oil pressure to generate the regulated oil pressure; the solenoid valve adapted to be turned ON/OFF by the control unit for generating the signal oil pressure; and the change-over valve adapted to be switched in response to the signal oil pressure for taking the first position to feed the forward range oil pressure to the hydraulic servo and the second position to feed the regulated oil pressure to the hydraulic servo.

When the driver operates the range selecting means to place the manual valve in the forward range position, the forward range oil pressure is generated and is regulated by the regulator valve so that the regulated oil pressure is generated. Moreover, the solenoid valve is turned ON/OFF by the control unit so that the signal oil pressure is generated by the solenoid valve.

If the change- over valve is placed in the first position by the signal oil pressure, the forward range oil pressure is fed to the hydraulic servo, on the other hand, if the change- over valve is placed in the second position by the signal oil pressure, the regulated oil pressure is fed to the hydraulic servo.

The delay means outputs, if the switching from the forward running range to the neutral range is detected by the range detecting means, the signal to the solenoid valve so that the change-over valve may be placed in the second position till the set time period elapses, and in the first position when the set time period elapses. As a result, the discharge of the oil from the hydraulic servo can be substantially completed till the change-over valve is placed in the first position.

Even if, in this case, the N-D switching is effected immediately after the D-N switching, the change-over valve is placed in the second position in accordance with the D-N switching so that the oil under the forward range pressure is not fed to the hydraulic servo. As a result, the engaging shock can be prevented to apply the clutch smoothly.

According to a further aspect of the present invention, the change-over valve takes the first position, if the solenoid valve is ON, and the second position if OFF.

In this case, the solenoid valve is OFF (or inconductive) except for while the regulated oil pressure is fed to the hydraulic servo. In case, moreover, the neutral range is selected, too, the solenoid valve is OFF (or inconductive) after the set time period elapsed. As a result, the power consumption can be reduced, and the heat generation of the solenoid valve can be suppressed to improve the durability of the solenoid valve.

According to a further aspect of the present invention, the control system for an automatic transmission further comprises the hydraulic servo rotation deciding means for deciding the rotational state of the hydraulic servo. Moreover, the hydraulic servo has the check valve, and the control unit further includes the delay inhibiting means for inhibiting the delay of the delay means if it is decided that the rotational state of the hydraulic servo is sufficient for opening the check valve.

When the R.P.M. of the hydraulic servo rises, the check valve is opened by the centrifugal force to abruptly discharge the oil in the hydraulic servo so that the remainder of the oil in the hydraulic servo is accordingly reduced. As a result, the engaging shock is not generated even if the delay of the delay means is inhibited.

As a result, the solenoid valve can be turned OFF to reduce the power consumption and can have its heat generation suppressed to improve its durability.

Fig. 1 is a block diagram showing an automatic transmission according to an embodiment of the present invention;

Fig. 2 is a schematic diagram showing the automatic transmission according to the embodiment of the present invention;

Fig. 3 is a chart showing the operations of the automatic transmission according to the embodiment of the present invention;

Fig. 4 is a first diagram showing a hydraulic circuit of the automatic transmission according to the embodiment of the present invention;

Fig. 5 is a second diagram showing the hydraulic circuit of the automatic transmission according to the embodiment of the present invention;

Fig. 6 is a main flow chart showing the operations of an automatic transmission control system according to the embodiment of the present invention;

Fig. 7 is a flow chart showing a D-N switching control subroutine in the embodiment of the present invention;

Fig. 8 is a flow chart showing a N-D switching control subroutine in the embodiment of the present invention:

Fig. 9 is a map plotting a throttle valve pressure against an input torque in the embodiment of the present invention;

Fig. 10 is a map plotting the throttle pressure against an engine R.P.M. in the embodiment of the present invention;

Fig. 11 is a map plotting the throttle pressure against a throttle opening in the embodiment of the present invention;

Fig. 12 is a waveform chart illustrating the oil pressure in the hydraulic servo and the torque in the embodiment of the present invention; and

Fig. 13 is a waveform chart illustrating the oil pressure and the torque in the control system for an automatic transmission of the prior art.

An embodiment of the present invention will be described in detail in the following with reference to the accompanying drawings.

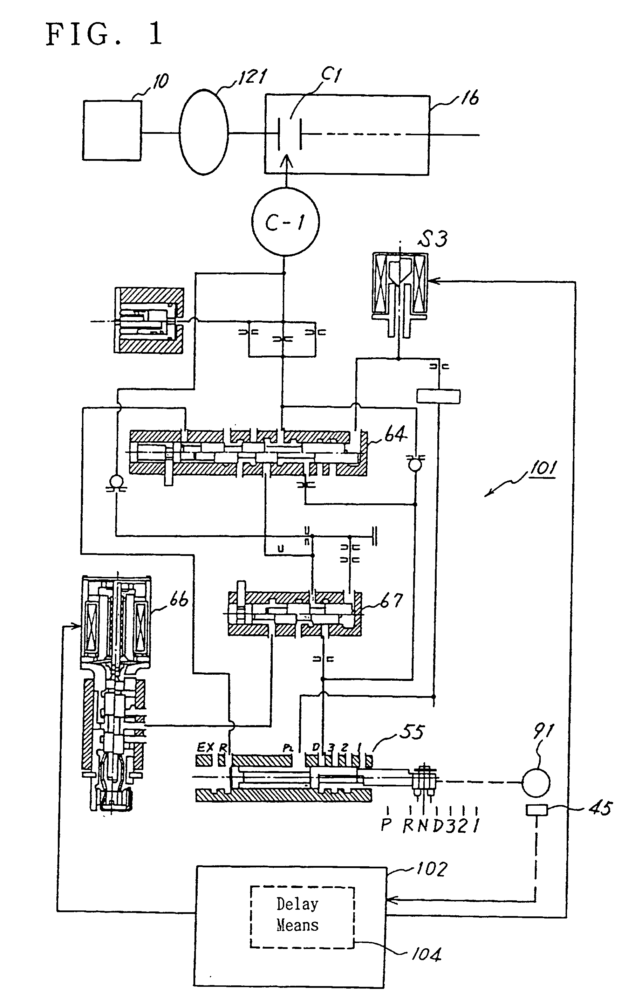

Fig. 1 is a block diagram showing an automatic transmission according to an embodiment of the present invention.

As shown, the control system is constructed to comprise: a fluid coupler 121 for transmitting the rotation of an engine 10 to a transmission 16; a first clutch C1 adapted to be applied, when a forward running range is selected, and released when a neutral range is selected; a shift lever 91 acting as range selecting means for selecting a range; a neutral start switch (N.S.S.W.) acting as range detecting means for detecting the selected range; a hydraulic circuit 101; and a control unit 102.

The hydraulic circuit 101 is composed of: a hydraulic servo C-1 adapted to be fed with an oil pressure for applying the first clutch C1; a manual valve 55 adapted to take at least a forward range position and a neutral range position by operating the shift lever 91 for generating a forward range oil pressure in the forward range position; a C-1 control valve 67 acting as a regulator valve for adjusting the forward range oil pressure in accordance with a control oil pressure coming from a linear solenoid valve 66, to generate a regulated oil pressure; a third solenoid valve S3 adapted to be turned ON/OFF by the control unit 102 for generating a signal oil pressure; and a neutral relay valve 64 adapted to be switched in response to the signal oil pressure and acting as a change-over valve for taking a first position for feeding the forward range oil pressure to the hydraulic servo C-1 and a second position for feeding the regulated oil pressure to the hydraulic servo C-1.

Moreover, the control unit 102 is equipped with delay means 104 for placing, when the neutral range is selected, the neutral relay valve 64 in the second position till a set time period elapses and in the first position when the set time period elapsed. Incidentally, reference numeral 66 designates the linear solenoid valve.

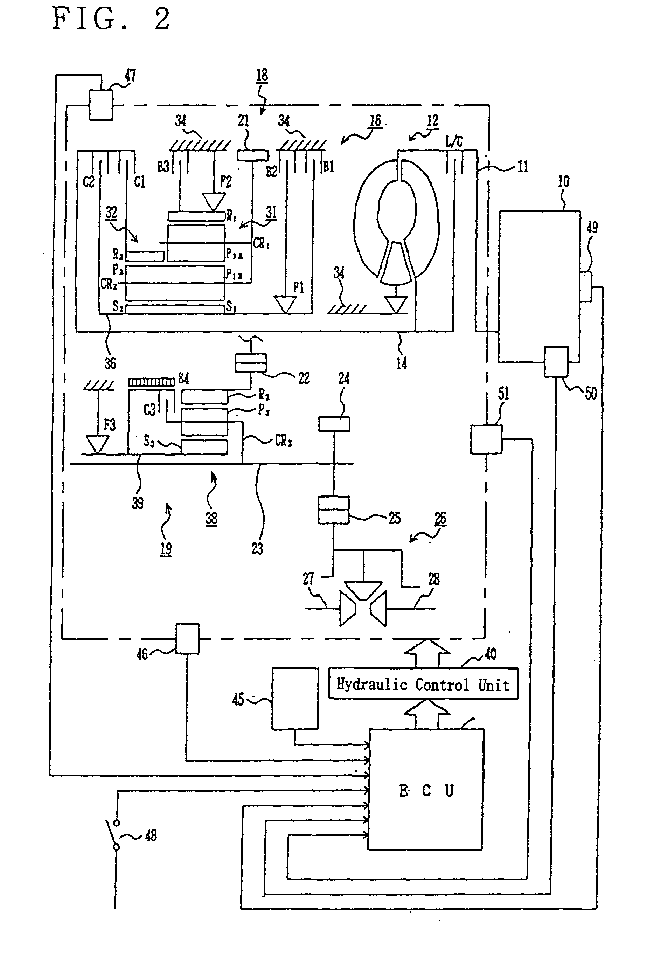

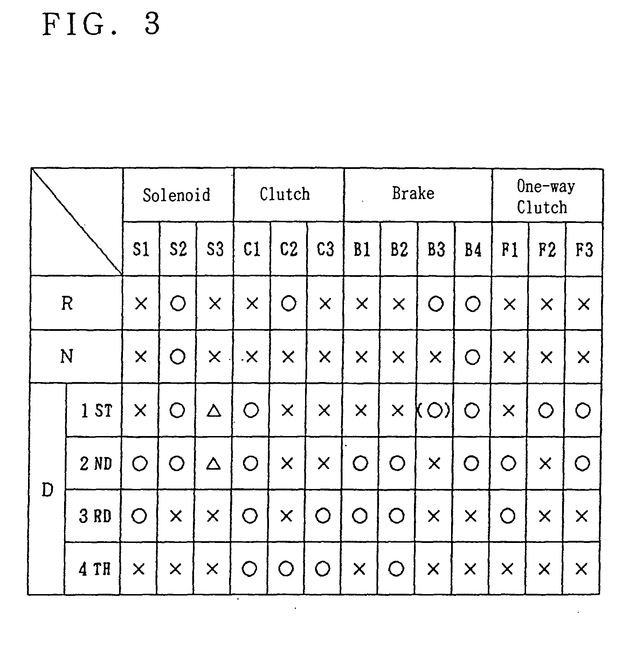

Fig. 2 is a schematic diagram showing the automatic transmission according to the embodiment of the present invention, and Fig. 3 is a chart showing the operations of the automatic transmission according to the embodiment of the present invention.

As shown, the rotation generated by the engine 10 is transmitted through an output shaft 11 to a torque converter 12 acting as the fluid coupler 121 (of Fig. 1). This torque converter 12 transmits the rotation of the engine 10 through a working fluid to an output shaft 14 but is enabled to transmit the rotation of the engine 10 directly to the output shaft 14 by a lockup clutch L/C which is applied when the vehicle speed v exceeds a set value.

To the output shaft 14, there is connected the transmission 16 for effecting four forward speed and one reverse. This transmission 16 is composed of a main transmission 18 for effecting three forward speeds and one reverse, and an auxiliary transmission 19 of underdrive type. Thus, the rotation of the main transmission 18 is transmitted through a counter drive gear 21 and a counter driven gear 22 to the auxiliary transmission 19, the output shaft 23 of which has its rotation transmitted through an output gear 24 and a ring gear 25 to a differential unit 26.

In this differential unit 26, the rotation transmitted through the output gear 24 is differentiated so that the rotational differences are transmitted to the not-shown drive wheels through lefthand and righthand drive shafts 27 and 28.

The main transmission 18 is equipped not only with a first planetary gear unit 31 and a second planetary gear unit 32 but also with first and second clutches C1 and C2, first, second and third brakes B1. B2 and B3, and first and second one-way clutches F1 and F2, all for selectively transmitting the torque between the individual elements of the two planetary gear units 31 and 32. Incidentally, the first clutch C1 corresponds to the clutch C of Fig. 1.

The first planetary gear unit 31 is composed of: a ring gear $R_1$ connected to a drive unit casing 34 through the third brake B3 and the second one-way clutch F2 which are juxtaposed to each other; a sun gear $S_1$ formed on a sun gear shaft 36 which is fitted on and rotatably supported by the output shaft 14; a carrier $CR_1$ connected to the counter drive gear 21; and pinions $P_{1A}$ and $P_{1B}$ meshing between the ring gear $R_1$ and the sun gear $S_1$ and rotatably supported by the carrier $CR_1$.

The aforementioned sun gear shaft 36 is connected through the second clutch C2 to the output shaft 14. Moreover, the sun gear shaft 36 is connected to the drive unit casing 34 through the first brake B1 and through the first one-way clutch F1 and the second brake B2 which are juxtaposed to each other.

On the other hand, the aforementioned second planetary gear unit 32 is composed of: a ring gear $R_2$ connected through a first clutch C1 to the output shaft 14; a sun gear $S_2$ formed on the sun gear shaft 36 integrally with the sun gear $S_1$; a carrier $CR_2$ connected to the carrier $CR_1$; and a pinion $P_2$ meshing between the ring gear $R_2$ and the sun gear $S_2$, rotatably supported by the carrier $CR_2$ and formed integrally with the pinion $P_{1B}$.

The aforementioned counter drive gear 21 is caused to mesh with the counter driven gear 22, which is arranged in the auxiliary transmission 19, to transmit the rotation having its speed changed by the main transmission 18, to the auxiliary transmission 19.

This auxiliary transmission 19 is equipped not only with a third planetary gear unit 38 but also with a third clutch C3, a fourth brake B4 and a third one-way clutch F3 all for selectively transmitting the torque between the individual elements of the third planetary gear unit 38.

This third planetary gear unit 38 is composed of: a ring gear $R_3$ connected to the counter driven gear 22; a sun gear $S_3$ formed on a sun gear shaft 39 which is rotatably fitted on the output shaft 23; a carrier $CR_3$ fixed on the output shaft 23; and a pinion $P_3$ meshing between the ring gear $R_3$ and the sun gear $S_3$ and rotatably supported by the carrier $CR_3$.

Here will be described the operations of the automatic transmission thus constructed.

Incidentally, in Fig. 3, S1: the first solenoid valve, S2: the second solenoid valve, S3: third solenoid valve, C1: the first clutch, C2: the second clutch, C3: the third clutch, B1: the first brake; B2: the second brake, B3: the third brake, B4: the fourth brake, F1: the first one-way clutch, F2: the second one-way clutch, and F3: the third one-way clutch. Moreover, R: an R-range, N: an N-range, D: a D-range, 1ST: a 1st speed gear stage, 2ND: a 2nd speed gear stage, 3RD: a 3rd speed gear stage, and 4TH: a 4th speed gear stage.

Moreover, symbol ○ indicates that the individual solenoids of the first solenoid valve S1, the second solenoid valve S2 and the third solenoid valve S3 are ON (or conductive), that the first clutch C1, the second clutch C2, the third clutch C3, the first brake B1, the second brake B2, the third brake B3 and the fourth brake B4 are applied, and that the first one-way clutch F1, the second one-way clutch F2 and the third one-way clutch F3 are locked. On the other hand, symbol × indicates that the individual solenoids of the first solenoid valve S1, the second solenoid valve S2 and the third solenoid valve S3 are OFF (or inconductive), that the first clutch C1, the second clutch C2, the third clutch C3, the first brake B1, the second brake B2, the third brake B3 and the fourth brake B4 are released, and that the first one-way clutch F1, the second one-way clutch F2 and the third one-way clutch F3 are set free.

Incidentally, symbol △ indicates that those elements are turned ON/OFF when a neutral control state is established, and symbol (⊙) indicates that the elements are applied at the engine braking time.

At the 1st speed in the D-range, the first clutch C1 and the fourth brake B4 are applied, and the second one-way clutch F2 and the third one-way clutch F3 are locked. Then, the rotation of the input shaft 14 is transmitted through the first clutch C1 to the ring gear $R_2$. Since, in this state, the rotation of the ring gear $R_1$ is blocked by the second one-way clutch F2, the rotation of the carrier $CR_2$ is drastically decelerated, while rotating the sun gear $S_2$ idly, and is transmitted to the counter drive gear 21.

The rotation transmitted from the counter drive gear 21 to the counter driven gear 22 is transmitted to the ring gear $R_3$. Since, however, the rotation of the sun gear $S_3$ is blocked by the fourth brake B4, the rotation of the carrier $CR_3$ is further decelerated and is transmitted to the output shaft 23.

At the 2nd speed in the D-range, on the other hand, the first clutch C1, the first brake B1, the second brake B2 and the fourth brake B4 are applied, and the first one-way clutch F1 and the third one-way clutch F3 are locked. Then, the rotation of the input shaft 14 is transmitted through the first clutch C1 to the ring gear $R_2$, but the rotation of the sun gear S2 is blocked by the second brake B2 and the first one-way clutch F1. As a result, the rotation of the ring gear $R_2$ is decelerated and transmitted to the carrier $CR_2$, the rotation of which is transmitted to the counter drive gear 21 while rotating the ring gear $R_1$ idly.

The rotation transmitted from the counter drive gear 21 to the counter driven gear 22 is transmitted to the ring gear $R_3$. Since, however, the rotation of the sun gear $S_3$ is blocked by the fourth brake B4, the rotation of the carrier $CR_3$ is decelerated and transmitted to the output shaft 23.

Next, at the 3rd speed in the D-range, the first clutch C1, the third clutch C3, the first brake B1 and the second brake B2 are applied, and the first one-way clutch F1 is locked. Then, the rotation of the input shaft 14 is transmitted through the first clutch C1 to the ring gear $R_2$, and the rotation of the sun gear $S_2$ is blocked by the second brake B2 and the first one-way clutch F1. As a result, the rotation of the ring gear $R_2$ is decelerated and transmitted to the carrier $CR_2$, the rotation of which is transmitted to the counter drive gear 21 while rotating the ring gear $R_1$ idly.

The rotation transmitted from the counter drive gear 21 to the counter driven gear 22 is transmitted to the ring gear $R_3$. Since, however, the relative rotations of the carrier $CR_3$ and the sun gear $S_3$ are blocked by the third clutch C3, the third planetary gear 38 comes into its directly connected state. As a result, the rotation of the counter driven gear 22 is transmitted as it is to the output shaft 23.

Next, at the 4th speed in the D-range, the first clutch C1, the second clutch C2, the third clutch C3 and the second brake B2 are applied. Then, the rotation of the input shaft 14 is transmitted through the first clutch C1 to the ring gear $R_2$ and through the second clutch C2 to the sun gear $S_2$ so that the first and second planetary gear units 31 and 32 come into their directly connected states. As a result, the rotation of the output shaft 11 is transmitted as it is to the counter drive gear 21.

The rotation transmitted from the counter driven gear 21 to the counter driven gear 22 is transmitted to the ring gear $R_3$. Since, however, the relative rotations of the carrier $CR_3$ and the sun gear $S_3$ are blocked by the third clutch C3, the third planetary gear unit 38 comes into its directly connected state. As a result, the rotation of the counter driven gear 22 is transmitted as it is to the output shaft 23.

Incidentally, the aforementioned automatic transmission is arranged with the not-shown hydraulic circuit for applying/releasing the first clutch C1, the second clutch C2, the third clutch C3, the first brake B1, the second brake B2, the third brake B3 and the fourth brake B4, and this hydraulic circuit can be controlled by a hydraulic control circuit 40. This hydraulic control circuit 40 is connected with an automatic transmission control system (i.e., ECU) 41 so that it is controlled according to the control program of the automatic transmission control system 41.

Moreover, this automatic transmission control system 41 is connected with the neutral start switch 45, an oil temperature sensor 46. an R.P.M. sensor 47, a brake switch 48, an engine R.P.M. sensor 49, a throttle opening sensor 50 and a vehicle speed sensor 51.

Thus: the shift position of the shift lever 91 (of Fig. 1), i.e., the selected range can be detected by the neutral start switch 45; the temperature of the oil in the hydraulic circuit can be detected by the oil temperature sensor 46; and the R.P.M. of the input side of the first clutch C1, i.e., the R.P.M. $N_{C1}$ of the output shaft 14 (as will be called the "clutch input side R.P.M.) can be detected by the R.P.M. sensor 47.

Moreover: whether or not the not-shown brake pedal is depressed can be detected by the brake switch 48; the engine R.P.M. $N_E$ can be detected by the engine R.P.M. sensor 49; the throttle opening θ can be detected by the throttle opening sensor 50; and the vehicle speed v can be detected by the vehicle speed sensor 51.

Here will be described the aforementioned hydraulic circuit.

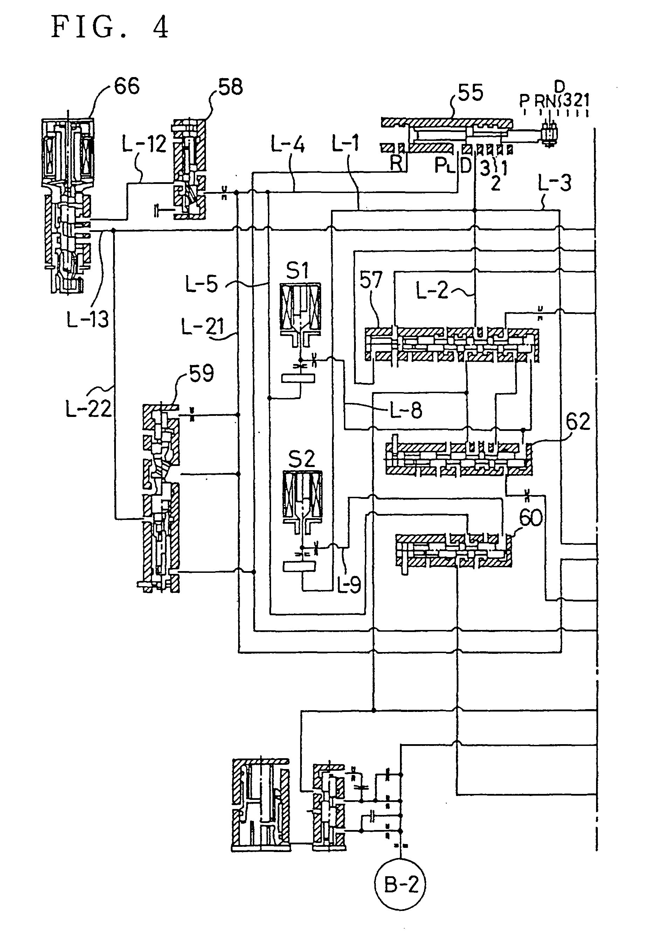

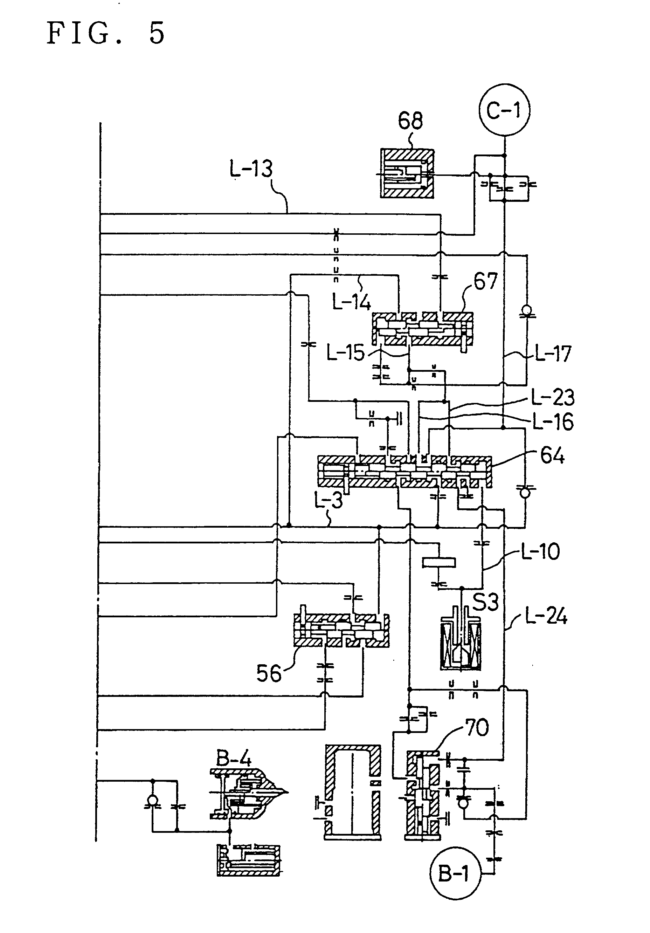

Fig. 4 is a first diagram showing a hydraulic circuit of the automatic transmission according to the embodiment of the present invention, and Fig. 5 is a second diagram showing the hydraulic circuit of the automatic transmission according to the embodiment of the present invention.

As shown, a primary valve 59 regulates the oil pressure coming from the not-shown oil pressure source and outputs it as a line pressure to an oil passage L-21. Moreover, the manual valve 55 is formed with ports 1, 2, 3, D, $P_L$ and R. The line pressure fed from the primary valve 59 to the port $P_L$ via the oil passages L-21 and L-4 is established as the 1st-range pressure, the 2nd-range pressure, the 3rd-range pressure, the D-range and the R-range pressure at the ports 1, 2, 3, D and R, respectively, by operating the shift lever 91 (of Fig. 1). The oil under the D-range pressure oil generated at the port D is fed via an oil passage L-1 to the second solenoid valve S2, via an oil passage L-2 to a 1-2 shift valve 57, and via an oil passage L-3 to a B-1 sequence valve 56. On the other hand, the oil of the oil passage L-21 under the line pressure from the primary valve 59 is fed to the third solenoid valve S3, via an oil passage L-4 to a solenoid modulator valve 58 and further via the oil passage L-5 to the first solenoid valve S1 and a 2-3 shift valve 60.

The first solenoid valve S1, the second solenoid valve S2 and the third solenoid valve S3 are turned ON/OFF in response to the signals of the hydraulic control circuit 40 (of Fig. 2) so that the first solenoid valve S1 feeds a signal oil pressure via an oil passage L-8 to the 1-2 shift valve 57 and a 3-4 shift valve 62, so that the second solenoid valve S2 feeds a signal oil pressure via an oil passage L-9 to the 2-3 shift valve 60, and so that the third solenoid value S3 feeds a signal oil pressure via an oil passage L-10 to the neutral relay valve 64.

The 1-2 shift valve 57 takes an upper half position (i.e, the upper position of the spool) at the 1st speed and the lower half position (i.e., the lower position of the spool) at the 2nd, 3rd and 4th speeds; the 2-3 shift valve 60 takes the lower half position at the 1st and 2nd positions and the upper half position at the 3rd and 4th speeds; the 3-4 shift valve 62 takes the upper half position at the 1st and 4th speeds and the lower half position at the 2nd and 3rd speeds; and the neutral relay valve 64 takes the upper half position in the neutral control state and the lower half position at the 1st to 4th speeds.

The solenoid module valve 58 is connected via an oil passage L-12 with the linear solenoid valve 66, which is connected via an oil passage L-13 with the C-1 control valve 67. The linear solenoid valve is further connected via an oil passage L-22 with the primary valve 59.

In response to the signal from the hydraulic control circuit 40, moreover, the linear solenoid valve 66 is controlled to feed a throttle pressure $P_{TH}$ as the control oil pressure to the C-1 control valve 67. This C-1 control valve 67 is fed with the D-range pressure the via oil passages L-3 and L-14 so that it regulates the D-range pressure to a pressure $P_{C1}$ (as will be called the "C-1 oil pressure") of a hydraulic servo C-1, as corresponds to the throttle pressure $P_{TH}$ coming from the linear solenoid valve 66, and feeds the pressure $P_{C1}$ to an oil passage L-15.

The aforementioned neutral relay valve 64 takes the upper half position in the neutral control state. In this neutral control state, therefore, the C-1 oil pressure $P_{C1}$ established in the oil passage L-15 is fed via an oil passage L-16, the neutral relay valve 64 and an oil passage L-17 to the hydraulic servo C-1. The C-1 oil pressure $P_{C1}$ is further fed via oil passages L-23 and L-24 to a B-1 control valve 70.

Moreover, the neutral relay valve 64 normally takes the lower half position at the 1st to 4th speeds. As a result, at these 1st to 4th speeds, the D-range pressure oil is fed via the oil passage L-3, the neutral relay valve 64 and the oil passage L-17 to the hydraulic servo C-1. In the neutral control state, moreover, the neutral relay valve 64 is switched to the upper half position to connect the oil passage L-16 and the oil passage L-17. Incidentally, reference numeral 68 designates a damper valve which is arranged in the oil passage L-17 for absorbing the pulsations in the C-1 oil pressure $P_{C1}$, and characters B-1, B-2 and B-3 designate hydraulic servos of the first brake B1, the second brake B2 and the third brake B3, respectively.

Incidentally, at the N-D switching time, the manual valve 55 is switched by the operation of the shift lever 91 to generate the D-range pressure in the oil passage L-3. Then, the D-range pressure is regulated by the C-1 control valve 67 to generate the C-1 oil pressure $P_{C1}$, and the neutral relay valve 64 is switched to feed the C-1 oil pressure $P_{C1}$ to the hydraulic servo C-1 so that the first clutch C1 can be smoothly applied.

If, at this time, the switching of the neutral relay valve 64 is delayed, the D-range pressure is temporarily fed through the neutral relay valve 64 to the hydraulic servo C-1. Since, however, the hydraulic servo C-1 is formed with the loss stroke, no influence is exerted as a result of the feed of the D-range pressure.

If, however, the N-D switching is effected immediately after the D-N switching, the oil at the time when the D-range is selected is left in the hydraulic servo C-1 at the N-D switching time. If, therefore, the D-range pressure is temporarily fed to the hydraulic servo C-1 due to the delay in the switching of the neutral relay valve 64, the rise of the oil pressure in the hydraulic servo C-1 is accelerated to cause a serious engaging shock.

In accordance with the D-N switching, therefore, the delay means 104 starts the timing operation of the not-shown timer, and the third solenoid valve S3 is turned ON for a time period till the time period $T_{DN}$ necessary for the oil to leave the hydraulic servo C-1 and the oil passage L-17 lapses, thereby to switch the neutral relay valve 64 to the side of the C-1 oil pressure $P_{C1}$.

Here will be described the operations for the D-N switching time and for the N-D switching time.

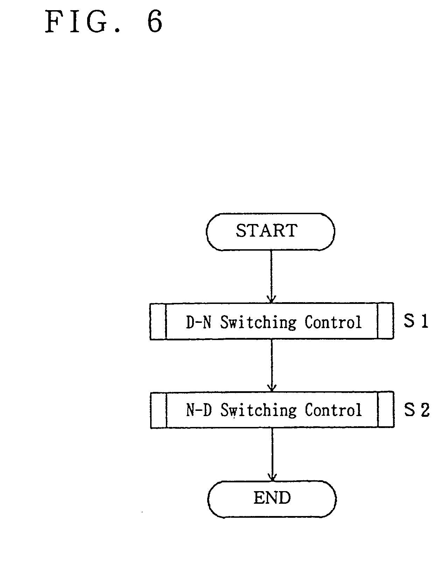

Fig. 6 is a main flow chart showing the operations of an automatic transmission control system according to the embodiment of the present invention.

  Step S1: A control is made for the D-N switching.
  Step S2: A control is made for the N-D switching.

Here will be described a D-N switching control subroutine of Step S1 of Fig. 6.

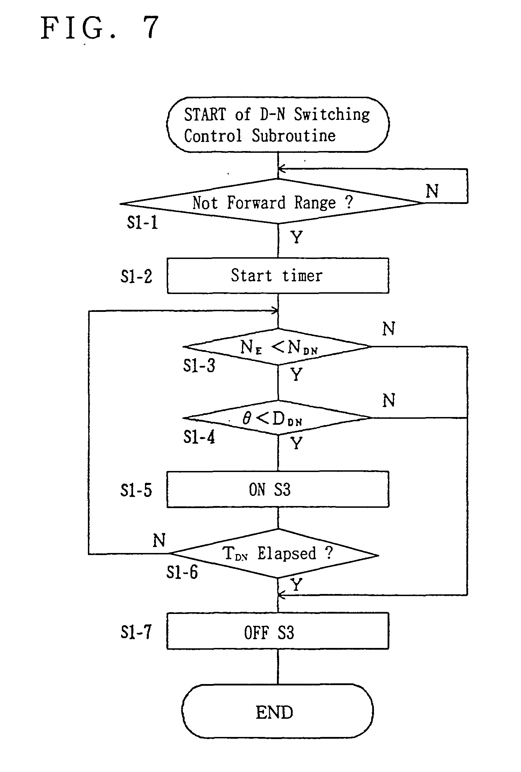

Fig. 7 is a flow chart showing a D-N switching control subroutine in the embodiment of the present invention.

Step S1-1: It is awaited that the range selected by the shift lever 91 (of Fig. 1) changes to one other than the forward range. If this condition is satisfied, the subroutine advances to Step S1-2.

Step S1-2: The timing is started by the not-shown timer. The set time period $T_{DN}$ for ending the timing is determined by considering the release time period of the oil in the hydraulic servo C-1 (of Fig. 5) of the first clutch (of Fig. 2) and in the oil passage L-17.

Step S1-3: The hydraulic servo rotation deciding means decides whether or not the engine R.P.M. $N_E$ is lower than the set value $N_{DN}$. Then, the subroutine advances to Step S1-4, if the answer is YES, and to Step S1-7 if NO. Thus, the delay inhibiting means inhibits the delay of the delay means 104.

Incidentally, the hydraulic servo C-1 is arranged with the not-shown check valve which is opened, when the oil pressure drops, by the centrifugal force to abruptly discharge the oil in the hydraulic servo C-1. If, therefore, the set value $N_{DN}$ is set to the R.P.M. at which the check valve is opened by the centrifugal force, the R.P.M. of the hydraulic servo C-1 rises according to the engine R.P.M. $N_E$, if this value $N_E$ just after the D-N switching exceeds the set value $N_{DN}$, so that the check valve is opened. As a result, the oil in the hydraulic servo C-1 can be abruptly discharged. Since, in this case, the third solenoid valve S3 need not be turned ON (or conductive), the power consumption can be reduced while suppressing the heat generation of the third solenoid valve S3, to improve the durability of the third solenoid valve S3.

Step S1-4: It is decided whether or not the throttle opening θ is less than the set value $D_{DN}$. The subroutine advances to Step S1-5, if the answer is YES, and to Step S1-7 if NO.

**[0090]** When the not-shown accelerator pedal is depressed after the D-N switching so that the throttle opening θ increases, the engine R.P.M. $N_E$ and the R.P.M. of the hydraulic servo C-1 accordingly rise to increase the centrifugal force. If, therefore, the set value $D_{DN}$ is set to an R.P.M. at which the check ball is opened by the centrifugal force, the R.P.M. of the hydraulic servo C-1 rises according to the throttle opening θ if this opening θ after the D-N switching exceeds the set value $D_{DN}$, so that the check valve is opened. As a result, the oil in the hydraulic servo C-1 can be abruptly discharged. Since, in this case, the third solenoid valve S3 need not be turned ON, the power consumption can be reduced, and the third solenoid valve S3 can have its heat generation suppressed to improve its durability.

Step S1-5: The third solenoid valve S3 is turned ON. If this third solenoid valve S3 is already ON, this ON status is held. In this meanwhile, the neutral relay valve 64 can be switched to the side of the C-1 oil pressure $P_{C1}$.

Step S1-6: It is decided whether or not the set time period $T_{DN}$ has elapsed. The subroutine advances to Step S1-7, if the answer is YES, and returns to Step S1-3 if NOT.

Step S1-7: The solenoid valve S3 is turned OFF (or inconductive).

Here will be described the N-D switching control subroutine of Step S2 of Fig. 6.

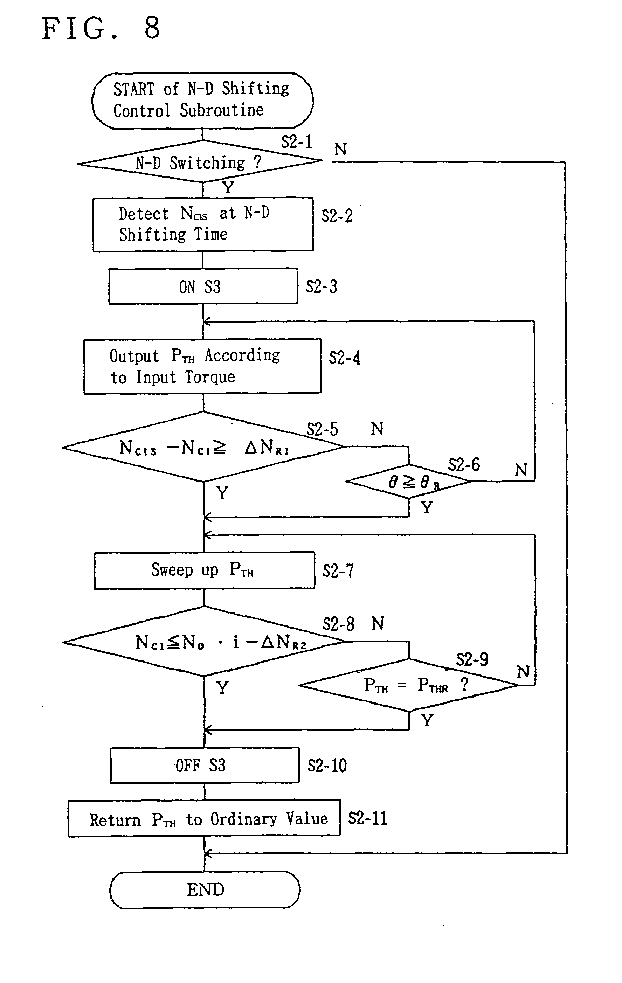

Fig. 8 is a flow chart showing a N-D switching control subroutine in the embodiment of the present invention;

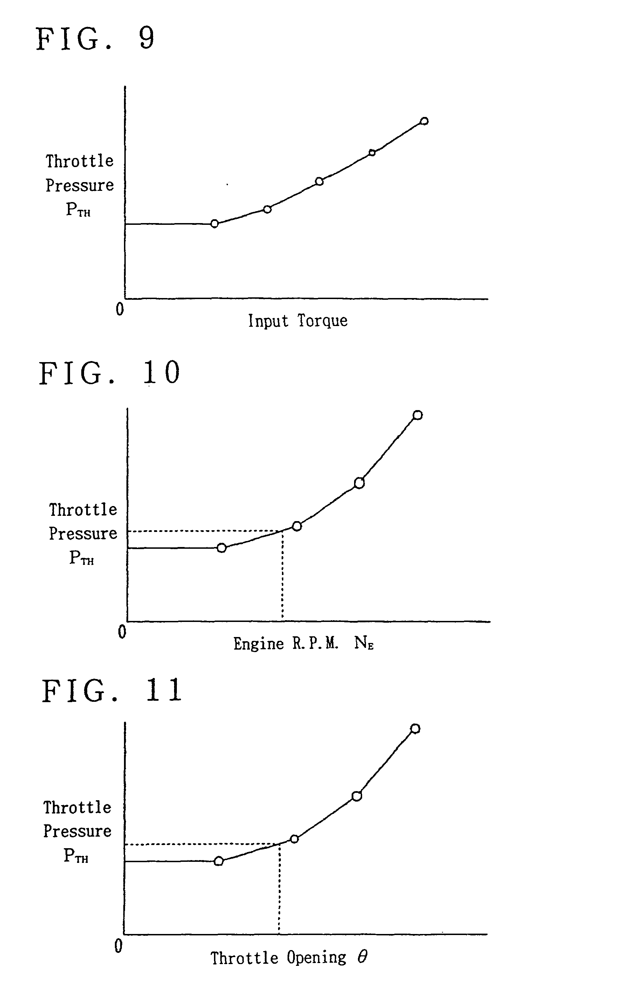

Fig. 9 plots the throttle pressure $P_{TH}$ against the input torque in the embodiment of the present invention ; Fig. 10 plots the throttle pressure $P_{TH}$ against the engine R.P.M. $N_E$ in the embodiment of the present invention; and Fig. 11 plots the throttle pressure $P_{TH}$ against the throttle opening θ in the embodiment of the present invention.

Step S2-1: It is decided whether or not the N-D switching has been effected on the basis of the signal coming from the neutral start switch 45 (of Fig. 1). The subroutine advances to Step S2-2, if the answer is YES, but the N-D switching control is ended if NOT.

Step S2-2: The clutch input side R.P.M. $N_{c1s}$ at the N-D switching time is detected.

Step S2-3: The solenoid valve S3 is turned ON.

Step S2-4: With reference to the map of Fig. 9, the throttle pressure $P_{TH}$ according to the input torque is outputted. This throttle pressure $P_{TH}$ can also be outputted with reference to the map of Fig. 10 at the idling-ON time and with reference to the map of Fig. 11 at the idling-OFF time.

Step S2-5: The clutch input side R.P.M. $N_{C1}$ at this time is detected, and it is decided whether or not the difference of the clutch input side R.P.M. $N_{C1S}$ at the N-D switching time from the clutch input side R.P.M. $N_{C1}$ is no less than a set value $\triangle N_{R1}$. Then, the subroutine advances to Step S2-7, if the difference ($N_{C1S}$ - $N_{C1}$) exceeds the set value $\triangle N_{R1}$, and to Step S2-6 if NOT.

Step S2-6: It is decided whether or not the throttle opening θ is no less than a set value $\theta_R$. The subroutine advances to Step S2-7, if the answer is YES, but returns to Step S2-4 if NOT.

The aforementioned set value $\triangle N_{R1}$ is set to a value at the instant when the not-shown piston of the hydraulic servo C-1 reaches its stroke end so that the first clutch C1 (of Fig. 2) starts its engagement (or grip), and the aforementioned set value $\theta_R$ is set to such a value as indicates that the driver starts his forward run.

In the state wherein the first clutch C1 does not start its engagement, as soon as the not-shown accelerator pedal is depressed to increase the throttle opening θ, the subroutine advances to Step S2-7.

Step S2-7: The throttle pressure $P_{TH}$ is swept up. In this case, the control oil pressure from the linear solenoid valve 66 (of Fig. 4) is changed to raise the C-1 oil pressure $P_{C1}$, and this C-1 oil pressure $P_{C1}$ is then raised by a set pressure $\triangle P$ for each lapse of a minute time period $\triangle t$, to continue the engagement of the first clutch C1.

Step S2-8: It is decided on the basis of the output R.P.M. No of the transmission 16 whether or not the application of the first clutch C1 has been ended. If, in this case, the gear ratio is designated at i, the R.P.M. at the output side of the first clutch C1 is assumed to be expressed by No · i. Hence, it is decided whether or not the clutch input side R.P.M. $N_{C1}$ is smaller by a set value $\triangle N_{R2}$ than the output side R.P.M. No · i, as defined by the following relation:

$$N_{C1} \leqq No \cdot i - \triangle N_{R2}.$$

Then, the subroutine advances to Step S2-10, if the application of the first clutch C1 is ended, and to Step S2-9 if NOT.

Step S2-9: It is decided whether or not the throttle pressure $P_{TH}$ reaches a set value $P_{THR}$. The subroutine advances to Step S2-10, if the answer is YES, but returns to Step S2-7 if NOT.

Step S2-10: The third solenoid valve S3 is turned OFF.

Step S2-11: The throttle pressure $P_{TH}$ is returned to an ordinary value corresponding to the gear stage and the throttle opening θ.

Fig. 12 is a waveform chart illustrating the oil pressure in the hydraulic servo and the torque in the embodiment of the present invention. Incidentally, Fig. 12 plots the C-1 oil pressure $P_{C1}$ and the torque T against the time.

Even if the N-D switching is effected immediately after the D-N switching, as seen from Fig. 12, the C-1 oil pressure $P_{C1}$ does not temporarily rise, nor abruptly rises the torque T. As a result, it is possible to prevent the engaging shock.

## Claims

1. A control system for an automatic transmission, comprising: a fluid coupler (121) for transmitting the rotation of an engine (10) to a transmission (16) ; a clutch (C1) adapted to be applied, when a forward running range is selected, and released when a neutral range is selected; range selecting means (91) for selecting a range; range detecting means for detecting the selected range; a hydraulic circuit (101); and a control unit (102).

   wherein said hydraulic circuit (101) includes: a hydraulic servo (C-1) adapted to be fed with an oil pressure for applying said clutch (C1); a manual valve (55) adapted by operating said range selecting means (91) to take at least a forward range position for generating a forward range oil pressure and a neutral range position; a regulator valve (67) for regulating said forward range oil pressure to generate a regulated oil pressure; a solenoid valve (53) adapted to be turned ON/OFF by said control unit (102) for generating a signal oil pressure; **characterized by** a change-over valve (64) adapted to be switched in response to said signal oil pressure for taking a first position to feed said forward range oil pressure to said hydraulic servo (C-1) and a second position to feed said regulated oil pressure to said hydraulic servo (C-1), and

   wherein said control unit (102) includes delay means (104) for outputting, if a switching from said forward running range to said neutral range is detected by said range detecting means, a signal to said solenoid valve (53) so that said change-over valve (64) may be placed in said second position till a set time period ($T_{DN}$) elapses, and in said first position when said set time period elapses.

2. A control system for an automatic transmission, according to claim 1.

   wherein said change-over valve (64) takes said first position, if said solenoid valve (53) is ON, and said second position if OFF.

3. A system according to

   claim 1 or 2, further comprising hydraulic servo rotation deciding means for deciding the rotational state of said hydraulic servo (C-1).

   wherein said hydraulic servo has a check valve, and

wherein said control unit (102) further includes delay inhibiting means for inhibiting the delay of said delay means if it is decided that the rotational state of said hydraulic servo is sufficient for opening said check valve.

4. A control system for an automatic transmission, according to claim 3,

wherein said hydraulic servo rotation deciding means is engine R.P.M. detecting means (49) for detecting the R.P.M. of the engine, and

wherein said delay inhibiting means inhibits the delay of said delay means (104) if the engine R.P.M. detected by said engine R.P.M. detecting means (49) is higher than a predetermined value.

5. A control system for an automatic transmission, according to claim 3,

wherein said hydraulic servo rotation deciding means is throttle opening detecting means (50) for detecting the throttle opening of the engine (10), and

wherein said delay inhibiting means inhibits the delay of said delay means (104) if the throttle opening ($\theta$) detected by said throttle opening detecting means (50) is higher than a predetermined value.

6. A control system for an automatic transmission, according to any of claims 1 to 5,

wherein said hydraulic circuit further includes a linear solenoid valve (66) for feeding a control oil pressure to said regulator valve (67)

wherein said regulator valve (67) generates said regulated oil pressure according to said control oil pressure fed from said linear solenoid valve (66), and

wherein said control unit (102) outputs, if a switching from said neutral range to said forward running range is detected by said range detecting means, a signal to said solenoid valve (53) so that said change-over valve (64) may be placed in said second position, and a signal to said linear solenoid valve (66) so that said regulated oil pressure from said regulator valve (67) may rise in a predetermined characteristics.

7. A control system for an automatic transmission, according to any of claims 1 to 6,

wherein the set time period of said delay means (104) is set on the basis of a release time period of the oil pressure from said hydraulic servo (C-1).

**Patentansprüche**

1. Steuerungssystem für ein Automatikgetriebe mit:

einer Fluidkupplung (121) zum Übertragen der Drehbewegung eines Motors (10) zu einem Getriebe (16);

einer Kupplung (C1), die dazu geeignet ist, eingerückt zu werden, wenn ein Vorwärtsfahrbereich ausgewählt ist, und freigegeben oder ausgerückt zu werden, wenn ein Leerlaufbereich ausgewählt ist;

einer Bereichwahleinrichtung (91) zum Auswählen eines Bereichs;

einer Bereicherfassungseinrichtung zum Erfassen des ausgewählten Bereichs;

einer Hydraulikschaltung (101); und

einer Steuereinheit (102);

wobei die Hydraulikschaltung (101) aufweist:

eine Hydraulik-Servo (C-1), der ein Öldruck zum Einrücken der Kupplung (C1) zugeführt werden kann;

ein handbetätigtes Ventil (55), das dazu geeignet ist, durch Betätigen der Bereichwahleinrichtung (91) mindestens eine Vorwärtsbereichposition einzunehmen, um einen Vorwärtsbereichöldruck zu erzeugen, und eine Leerlaufbereichposition;

ein Regelventil (67) zum Regeln des Vorwärtsbereichöldrucks zum Erzeugen eines geregelten Öldrucks; und

ein Solenoidventil (S3), das dazu geeignet ist, durch die Steuereinheit (102) ein-/ausgeschaltet zu werden, um einen Signalöldruck zu erzeugen;

**gekennzeichnet durch**

ein Umschaltventil (64), das dazu geeignet ist, in Antwort auf den Signalöldruck geschaltet zu werden, um eine erste Position zum Zuführen des Vorwärtsbereichöldrucks zur Hydraulik-Servo (C-1) und eine zweite Position zum Zuführen des geregelten Öldrucks zur Hydraulik-Servo (C-1) einzunehmen;

wobei die Steuereinheit (102) aufweist:

eine Verzögerungseinrichtung (104), die, wenn **durch** die Bereicherfassungseinrichtung ein Schaltvorgang vom Vorwärtsfahrbereich zum Leerlaufbereich erfaßt wird, dem Solenoidventil (S3) ein Signal zuführt, so daß das Umschaltventil (64) in der zweiten Position angeordnet werden kann, bis eine vorgegebene Zeitdauer ($T_{DN}$) verstrichen ist, und in der ersten Position, wenn die vorgegebene Zeitdauer verstrichen ist.

2. System nach Anspruch 1,

wobei das Umschaltventil (64) die erste Position einnimmt, wenn das Solenoidventil (S3) eingeschaltet ist, und die zweite Position, wenn es ausgeschaltet ist.

3. System nach Anspruch 1 oder 2,

ferner mit einer Hydraulik-Servo-Drehbewe.gungszustandbestimmungseinrichtung zum Bestimmen des Drehbewegungszustands der Hydraulik-Servo (C-1),

wobei die Hydraulik-Servo ein Absperrventil aufweist, und

wobei die Steuereinheit (102) ferner eine Verzögerungsdeaktivierungseinrichtung aufweist, die die Verzögerung der Verzögerungseinrichtung deaktiviert, wenn festgestellt wird, daß der Drehbewegungszustand der Hydraulik-Servo ausreichend ist, um das Absperrventil zu öffnen.

4. System nach Anspruch 3,

wobei die Hydraulik-Servo-Drehbewegungszustandbestimmungseinrichtung eine Motordrehzahlerfassungseinrichtung (49) zum Erfassen der Drehzahl des Motors ist, und

wobei die Verzögerungsdeaktivierungseinrichtung die Verzögerung der Verzögerungseinrichtung (104) deaktiviert, wenn die durch die Motordrehzahlerfassungseinrichtung (49) erfaßte Motordrehzahl größer ist als ein vorgegebener Wert.

5. System nach Anspruch 3,

wobei die Hydraulik-Servo-Drehbewegungszustandbestimmungseinrichtung eine Drosselklappenöffnungserfassungseinrichtung (50) zum Erfassen der Drosselklappenöffnung des Motors (10) ist, und

wobei die Verzögerungsdeaktivierungseinrichtung die Verzögerung der Verzögerungseinrichtung (104) deaktiviert, wenn die durch die Drosselklappenöffnungserfassungseinrichtung (50) erfaßte Drosselklappenöffnung ($\theta$) größer ist als ein vorgegebener Wert.

6. System nach einem der Ansprüche 1 bis 5,

wobei die Hydraulikschaltung ferner ein lineares Solenoidventil (66) zum Zuführen eines Steueröldrucks zum Regelventil (67) aufweist,

wobei das Regelventil (67) den geregelten Öldruck gemäß dem vom linearen Solenoidventil (66) zugeführten geregelten Öldruck erzeugt, und

wobei die Steuereinheit (102) ; wenn durch die Bereicherfassungseinrichtung ein Schaltvorgang vom Leerlaufbereich zum Vorwärtsfahrbereich erfaßt wird, ein Signal an das Solenoidventil (S3) ausgibt, so daß das Umschaltventil (64) auf die zweite Position eingestellt werden kann,und ein Signal an das lineare Solenoidventil (66) ausgibt, so daß der geregelte Öldruck vom Regelventil (67) gemäß einer vorgegebenen Kennlinie ansteigen kann.

7. System nach einem der Ansprüche 1 bis 6,

wobei die vorgegebene Zeitdauer der Verzögerungseinrichtung (104) auf der Basis einer Freigabezeitdauer des Öldrucks von der Hydraulik-Servo (C-1) eingestellt wird.

## Revendications

1. Système de commande pour transmission automatique, comprenant : un dispositif d'accouplement hydraulique (121) pour transmettre la rotation d'un moteur (10) à une transmission (16); un embrayage (C1) adapté pour être appliqué, lorsqu'un rapport de marche avant est sélectionné, et relâché lorsqu'un rapport neutre est sélectionné; un moyen de sélection de rapport (91) pour choisir un rapport; un moyen de détection de rapport pour détecter le rapport sélectionné; un circuit hydraulique (101); et un module de commande (102),

dans lequel ledit circuit hydraulique (101) comporte : un servomécanisme hydraulique (C-1) adapté pour recevoir une pression d'huile pour appliquer ledit embrayage (C1); une vanne manuelle (55) adaptée en actionnant ledit moyen de sélection de rapport (91) pour prendre au moins une position de rapport avant pour générer une pression d'huile de rapport avant et une position de rapport neutre; une soupape de régulation (67) pour réguler ladite pression d'huile de rapport avant afin de produire une pression d'huile régulée; une électrovanne (S3) adaptée pour être mise en MARCHE/ARRÊT par ledit module de commande (102) pour produire une pression d'huile de signal; **caractérisé par** une vanne inverseuse (64) adaptée pour être commutée en réponse à ladite pression d'huile de signal pour prendre une première position pour envoyer ladite pression d'huile de rapport avant audit servomécanisme hydraulique (C-1) et une seconde position pour envoyer ladite pression d'huile régulée audit servomécanisme hydraulique (C-1), et

dans lequel ledit module de commande (102) comporte un moyen de retard (104) pour envoyer un signal, si un passage dudit rapport de marche avant audit rapport neutre est détecté par ledit moyen de détection de rapport, à ladite électrovanne (S3) de sorte que ladite vanne inverseuse (64) peut être placée dans ladite seconde position jusqu'à ce qu'une durée préétablie ($T_{DN}$) se soit écoulée, et dans ladite première position lorsque ladite durée préétablie s'est écoulée.

2. Système de commande pour transmission automatique, selon la revendication 1, dans lequel ladite vanne inverseuse (64) prend ladite première position si ladite électrovanne (S3) est en position MARCHE, et si ladite seconde position est sur ARRÊT.

3. Système selon la revendication 1 ou 2, comprenant en outre un moyen de décision de rotation de servomécanisme hydraulique pour décider de l'état de rotation dudit servomécanisme hydraulique (C-1),

dans lequel ledit servomécanisme hydraulique comporte un clapet de retenue, et

dans lequel ledit module de commande (102) comporte en outre un moyen d'inhibition de retard pour inhiber le retard dudit moyen de retard s'il est décidé que l'état de rotation dudit servomécanisme hydraulique est suffisant pour ouvrir ledit clapet de retenue.

4. Système de commande pour transmission automatique, selon la revendication 3,

dans lequel ledit moyen de décision de rotation de servomécanisme hydraulique est un moyen de détection de régime (49) de moteur pour détecter le régime du moteur, et

dans lequel ledit moyen d'inhibition de retard inhibe le retard dudit moyen de retard (104) si le régime du moteur détecté par ledit moyen de détection de régime (49) de moteur est supérieur à une valeur déterminée au préalable.

5. Système de commande pour transmission automatique, selon la revendication 3,

dans lequel ledit moyen de décision de rotation de servomécanisme hydraulique est un moyen de détection de degré d'ouverture (50) de papillon pour détecter l'ouverture de papillon du moteur (10), et

dans lequel ledit moyen d'inhibition de retard inhibe le retard dudit moyen de retard (104) si le degré d'ouverture ($\theta$) de papillon détecté par ledit moyen de détection de degré d'ouverture (50) de papillon est supérieur à une valeur déterminée au préalable.

6. Système de commande pour transmission automatique, selon l'une quelconque des revendications 1 à 5,

dans lequel ledit circuit hydraulique comporte en outre une électrovanne linéaire (66) pour envoyer une pression d'huile de commande à ladite sodpape de régulation (67),

dans lequel ladite soupape de régulation (67) produit ladite pression d'huile régulée selon ladite pression d'huile de commande provenant de ladite électrovanne linéaire (66), et

dans lequel ledit module de commande (102) envoie, si un passage dudit rapport neutre audit rapport de marche avant est détecté par ledit moyen de détection de rapport, un signal à ladite électrovanne (S3) de sorte que ladite vanne inverseuse (64) peut être placée dans ladite seconde position, et un signal à ladite électrovanne linéaire (66) de sorte que ladite pression d'huile régulée provenant de ladite soupape de régulation (67) peut augmenter dans une caractéristique déterminée au préalable.

7. Système de commande pour transmission automatique, selon l'une quelconque des revendications 1 à 6,

dans lequel la durée préétablie dudit moyen de retard (104) est établie en se basant sur une durée de relâchement de la pression d'huile provenant dudit servomécanisme hydraulique (C-1).

# FIG. 1

# FIG. 2

# FIG. 3

| | | Solenoid | | | Clutch | | | Brake | | | | One-way Clutch | | |
|---|---|---|---|---|---|---|---|---|---|---|---|---|---|---|
| | | S1 | S2 | S3 | C1 | C2 | C3 | B1 | B2 | B3 | B4 | F1 | F2 | F3 |
| R | | × | ○ | × | × | ○ | × | × | × | ○ | ○ | × | × | × |
| N | | × | ○ | × | ×. | × | × | × | × | × | ○ | × | × | × |
| D | 1 ST | × | ○ | △ | ○ | × | × | × | × | (○) | ○ | × | ○ | ○ |
| D | 2 ND | ○ | ○ | △ | ○ | × | × | ○ | ○ | × | ○ | ○ | × | ○ |
| D | 3 RD | ○ | × | × | ○ | × | ○ | ○ | ○ | × | × | ○ | × | × |
| D | 4 TH | × | × | × | ○ | ○ | ○ | × | ○ | × | × | × | × | × |

# FIG. 4

# FIG. 5

FIG. 6

```
        ╭─────────────╮
        │    START    │
        ╰──────┬──────╯
               │
               ▼
    ┌─┬───────────────────────┬─┐
    │ │  D-N Switching Control │ │  S 1
    └─┴───────────────────────┴─┘
               │
               ▼
    ┌─┬───────────────────────┬─┐
    │ │  N-D Switching Control │ │  S 2
    └─┴───────────────────────┴─┘
               │
               ▼
        ╭─────────────╮
        │     END     │
        ╰─────────────╯
```

# FIG. 7

```
        ┌──────────────────────────┐
        │  START of D-N Switching   │
        │  Control Subroutine       │
        └──────────────────────────┘
                    │
                    ▼
          ╱───────────────────╲          N
S1-1    <   Not Forward Range ? >─────────┐
          ╲───────────────────╱           │
                    │ Y                    │
                    ▼                      │
        ┌──────────────────────────┐      │
S1-2    │       Start timer        │      │
        └──────────────────────────┘      │
                    │                      │
                    ▼                      │
          ╱───────────────────╲    N       │
S1-3    <     N_E < N_DN       >───────┐   │
          ╲───────────────────╱        │   │
                    │ Y                 │   │
                    ▼                   │   │
          ╱───────────────────╲    N    │   │
S1-4    <     θ < D_DN         >──────┐ │   │
          ╲───────────────────╱       │ │   │
                    │ Y               │ │   │
                    ▼                 │ │   │
        ┌──────────────────────────┐ │ │   │
S1-5    │         ON S3            │ │ │   │
        └──────────────────────────┘ │ │   │
                    │                 │ │   │
            N       ▼                 │ │   │
          ╱───────────────────╲       │ │   │
S1-6    <    T_DN Elapsed ?    >       │ │   │
          ╲───────────────────╱       │ │   │
                    │ Y               │ │   │
                    ▼                 │ │   │
        ┌──────────────────────────┐ │ │   │
S1-7    │         OFF S3           │ │ │   │
        └──────────────────────────┘ │ │   │
                    │                 │ │   │
                    ▼                 │ │   │
        ┌──────────────────────────┐ │ │   │
        │          END             │ │ │   │
        └──────────────────────────┘
```

# FIG. 8

```
        ╭─────────────────────────╮
        │ START of N-D Shifting   │
        │ Control Subroutine      │
        ╰─────────────────────────╯
                    │
                    │          S2-1        N
              ◇─────────────────◇──────────────────────────────┐
              ◇  N-D Switching ? ◇                             │
                    │Y                                          │
        ┌─────────────────────────┐                            │
        │ Detect N_CIS at N-D     │ S2-2                        │
        │ Shifting Time           │                            │
        └─────────────────────────┘                            │
                    │                                           │
           ┌──────────────────┐                                │
           │     ON S3        │ S2-3                            │
           └──────────────────┘                                │
                    │←───────────────────────────────────┐     │
        ┌─────────────────────────┐                      │     │
        │ Output P_TH According   │ S2-4                 │     │
        │ to Input Torque         │                      │     │
        └─────────────────────────┘                      │     │
                    │          S2-5          N            │     │
              ◇──────────────────────◇─────────────┐      │     │
              ◇ N_CIS − N_CI ≧ ΔN_R1 ◇             │      │     │
                    │Y                        ◇────────◇ S2-6  N │
                    │                         ◇ θ ≧ θ_R ◇───────┘
                    │←──────────────────────────────│Y
        ┌──────────────────────┐                         
        │   Sweep up P_TH      │ S2-7                     
        └──────────────────────┘                         
                    │          S2-8    N                  
              ◇────────────────────────◇──────────┐       
              ◇ N_CI ≦ N_0 · i − ΔN_R2 ◇          │       
                    │Y                    ◇───────────◇ S2-9  N
                    │                     ◇ P_TH = P_THR ? ◇──┐
                    │←──────────────────────│Y                │
        ┌──────────────────────┐                             │
        │     OFF S3           │ S2-10                        │
        └──────────────────────┘                             │
                    │                                         │
        ┌───────────────────────────────┐                    │
        │ Return P_TH to Ordinary Value │ S2-11              │
        └───────────────────────────────┘                    │
                    │←────────────────────────────────────────┘
           ╭──────────────────╮
           │      END         │
           ╰──────────────────╯
```

S2-1 N-D Switching ? — $N$ / $Y$

S2-2 Detect $N_{CIS}$ at N-D Shifting Time

S2-3 ON S3

S2-4 Output $P_{TH}$ According to Input Torque

S2-5 $N_{CIS} - N_{CI} \geqq \Delta N_{R1}$ — $N$ / $Y$

S2-6 $\theta \geqq \theta_R$ — $N$ / $Y$

S2-7 Sweep up $P_{TH}$

S2-8 $N_{CI} \leqq N_0 \cdot i - \Delta N_{R2}$ — $N$ / $Y$

S2-9 $P_{TH} = P_{THR}$ ? — $N$ / $Y$

S2-10 OFF S3

S2-11 Return $P_{TH}$ to Ordinary Value

# FIG. 9

Throttle Pressure $P_{TH}$ vs Input Torque

# FIG. 10

Throttle Pressure $P_{TH}$ vs Engine R.P.M. $N_E$

# FIG. 11

Throttle Pressure $P_{TH}$ vs Throttle Opening $\theta$

# FIG. 12

# FIG. 13